# EUROPEAN PATENT APPLICATION

(11) **EP 1 575 266 A1**
(43) Date of publication of application: **14.09.2005**
(21) Application number: 05101472.8
(22) Date of filing: 25.02.2005
(51) Int. Cl.: H04N 5/225

(54) **Camcorder filter mechanism**

(30) Priority: 10.03.2004 KR 2004016053
(71) Applicant: SAMSUNG ELECTRONICS CO., LTD., Gyeonggi-Do 442-742 (KR)
(72) Inventor: Park, Kwang-hyok, Yeongtong-gu, Suwon-si, Gyeonggi-do (KR); Kim, Nam-il, Jangan-gu, Suwon-si, Gyeonggi-do (KR)
(74) Representative: Geary, Stuart Lloyd

(57) **Abstract**

An OLPF switching apparatus has an OLPF fixing part that is pivotably fixed to a housing of a lens assembly and has a first OLPF for passing light of a first wavelength among incoming image information, and a second OLPF for passing light of a second wavelength among the incoming image information. A switching lever is pivotably fixed to the housing and has a first end which moves in relation to the movement of the OLPF fixing part to selectively locate the OLPF fixing part in one of a first OLPF setting position and a second OLPF setting position. An operating part is slidably disposed in an outer casing which seals the lens assembly. A link part is connected with the operating part and a second end of the switching lever forming a predetermined angle with respect to the first end.

## Description

The present invention relates to a camcorder comprising an optical filter mounted to a carrier for rotation into and out of an operational position, a lever coupled to the carrier for rotating the carrier so as to move the optical filter into and out of the operation position, a user-operable slider mounted for linear motion and coupled to the lever for pivoting the lever.

In general, digital camcorders are divided into a colour camcorders capable of recording colour images and colour/monochrome camcorders capable of recording both colour and monochrome images.

During the diurnal, when the ambient light is sufficiently high, colour/monochrome camcorders use the ambient light to record images in colour image and, therefore, without the need for a separate illuminator. However, during the nocturnal or in a dark area, where a human being cannot see, colour/monochrome camcorders use a strobo or flash as a supplementary illuminator in order to record in colour or use a plurality of infrared light emitting diodes (IR LEDs), projecting infrared light forwards from around the camcorder's, in order to record infrared images in monochrome.

Colour/monochrome camcorders use visible light, ranging from about 400 to 700nm, for recording in colour and infrared light of about 900nm when recording in monochrome. However, the same image sensing device, such as a charge-coupled device (CCD) or a complementary metal oxide semiconductor (CMOS), is used for both colour and monochrome recording. Therefore, in the diurnal, when both the visible rays and the infrared rays, are incident on a camcorder's lens, the visible and infrared rays are focused at different points resulting in blurring of the captured image.

In order to solve this problem, colour/monochrome camcorders have a switchable optical low pass filter (OLPF), which blocks infrared rays from reaching the image sensing device.

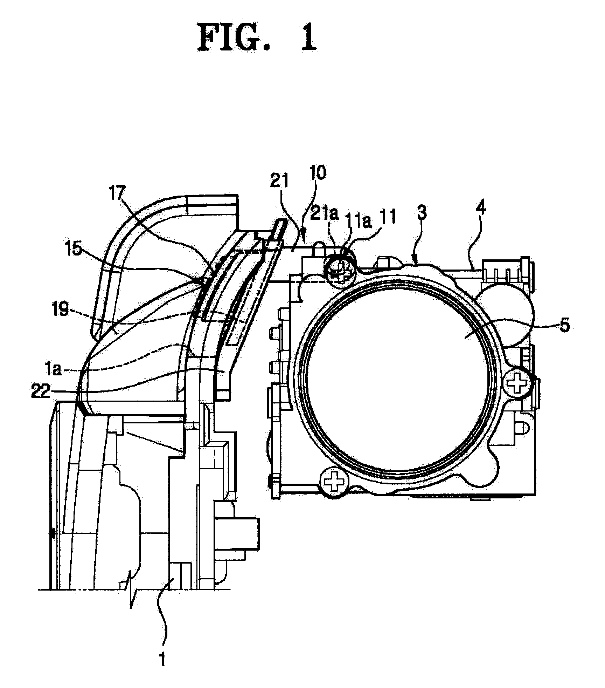

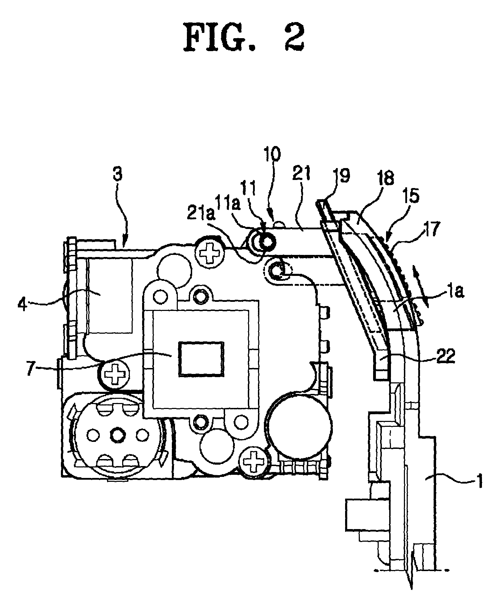

Figures 1 and 2 illustrate an OLPF switching apparatus 10 used in a general combined colour and monochrome camcorder.

The OLPF switching apparatus 10 comprises an OLPF fixing part (not shown) pivotably fixed to a rear fixing plate 7 (shown in Figure 2) of a housing 4 of a lens assembly 3 and having a diurnal filter (not shown) and a nocturnal filter, a switching lever 11, pivotably fixed to the rear fixing plate 7 of the housing 4, for turning the OLPF fixing part between the diurnal filter setting position, wherein the diurnal filter is located in the image propagation path between the lens 5 and the image sensing element (not shown), and a nocturnal filter setting position, wherein the nocturnal filter is located in the image propagation path between the lens 5 and the image sensing element, and an operating part 15 for operating the switching lever 11 to move the OLPF fixing part between the diurnal filter setting position and the nocturnal filter setting position.

The operating part 15 comprises a knob 17 protruding from an outer casing 1 of the camcorder and movably disposed in a slider slot 1a, formed in the outer casing 1, and a slider 19, movably held in a holder 22, is formed in the outer casing 1.

A protruding member 21, protruding from the inner side of the slider 19, has a pivoting hole 21 a defined therein for pivotably supporting an axially protruding end 11a of the switching lever 11.

The operation of the OLPF switching apparatus 10 with the above construction is as follows.

It is assumed that the OLPF filter switching apparatus 10 is in the diurnal mode for recording a colour image. That is, in the diurnal mode, as shown by dotted lines in Figure 2, the knob 17 of the operating part 15 is located at a lower position to set the OLPF fixing part in the diurnal filter setting position. In this state, when an operator wants to switch to the nocturnal filter, according to a variation in illumination or switch from the diurnal mode for colour image realization to the nocturnal mode for monochrome image recording to achieve a special effect, the operator slides the knob 17 of the operating part 15 up to set the OLPF fixing part in the nocturnal filter setting position as illustrated in solid lines of Figure 2.

As a result, the protruding member 21, inwardly protruding from the slider 19, moves up and, accordingly, the axially protruding end 11a of the switching lever 11, pivotably received in the pivoting hole 21a of the protruding member 21, moves up, pivoting the switching lever 11.

As the switching lever 11 turns, the OLPF fixing part, connected to the opposite side of the switching lever 11 to the axially protruding end 11 a, turns accordingly and moves to the nocturnal filter setting position where the nocturnal filter is located on the image propagation path between the lens 5 and the image sensing element. As a result, the OLPF switching apparatus 10 switches to the nocturnal mode.

When the operator wants to return the OLPF switching apparatus 10 back to the diurnal mode after recording an image in the nocturnal mode, the operator slides down the knob 17 of the operating part 15. Then, the protruding member 21, the switching lever 11 and the OLPF fixing part are operated in the reverse of the operation described above, so that the OLPF fixing part is moved from the nocturnal filter setting position to the diurnal filter setting position. As a result, the OLPF switching apparatus 10 switches to the diurnal mode.

However, in the conventional OLPF switching apparatus 10, the protruding member 21 of the operating part 15 moves up and down along the outer casing 1 in a substantially linear pattern, while the switching lever 11 connected with the protruding member 21 moves in a rotational pattern. That is, since the protruding member 21 and the switching lever 11 having different movement trajectories are directly connected with each other, when the protruding member 21 is moved up and down by the knob 17 to switch the diurnal mode and the nocturnal mode, the linear movement of the protruding member 21 is not smoothly transformed into the rotational movement of the switching lever 11.

If the movement of the protruding member 21 is not smoothly transmitted to the switching lever 11 as described above, the user feels resistance to sliding of the knob 17. Also, if a manipulation mistake occurs or is repeated often, the axially-protruding end 11 connecting the protruding member 21 and the switching lever 11 may be damaged and the product becomes unreliable.

A camcorder, according to the present invention, is characterised in that the slider is coupled to the lever by a link configured to convert linear motion of the slider into motion substantially conforming to the locus of the joint between the link and the lever.

Preferably, said joint comprises an aperture in which an end of the lever is moveably received.

Preferably, the link is pivotably coupled at one end to the slider and pivotably coupled at its other end to the lever. More preferably, the link is bent.

Additional preferred and optional features of the present invention are set forth in claims 5 to 12 appended hereto.

An embodiment of the present invention will now be described, by way of example, with reference to Figures 3 to 5B of the accompanying drawings, in which:
Figure 1 is a front view of the OLPF switching apparatus of a known digital camcorder;
Figure 2 is a rear view of the OLPF switching apparatus of Figure 1;
Figure 3 is a front view of a OLPF switching apparatus according to the present invention;
Figure 4 is a rear view of the OLPF switching apparatus of Figure 3; and
Figures 5A and 5B are front views showing the rear side fixing plate of the housing of a lens assembly for illustrating operation of the OLPF switching apparatus of Figure 3.

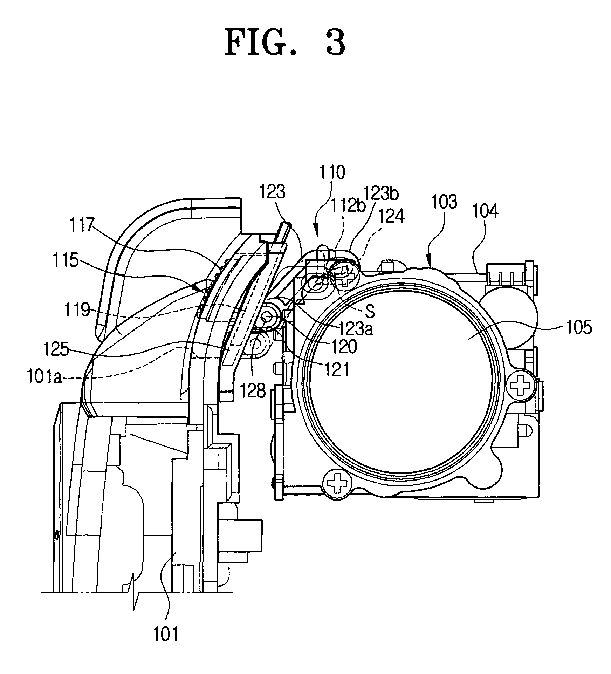

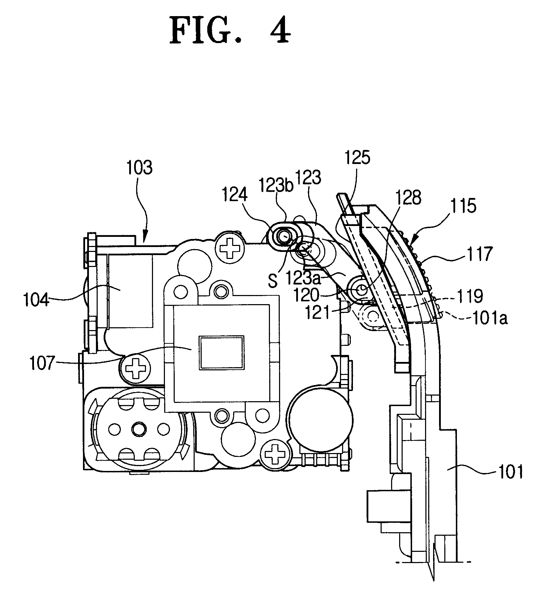

Figures 3 and 4 illustrate an OLPF switching apparatus 110 used in a colour/monochrome digital camcorder according to the present invention.

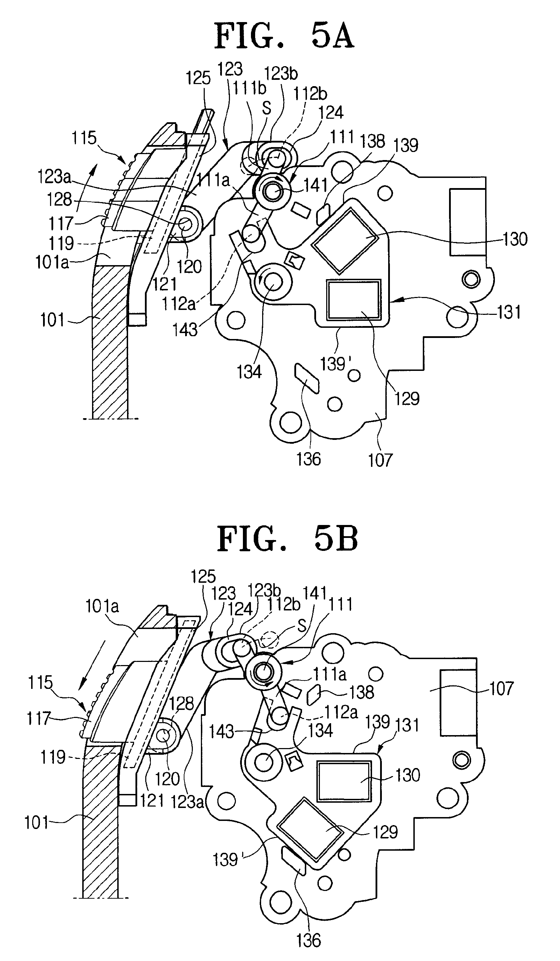

The OLPF switching apparatus 110 comprises an OLPF fixing part 131 (see Figure 5A), a switching lever 111 (see Figure 5A), an operating part 115 and a link part 123. The OLPF fixing part 131 comprises a diurnal filter 130 (see Figure 5A) and a nocturnal filter 129, which are disposed spaced apart from each other by a predetermined distance, and is pivotably fixed to a rear side fixing plate 107 of a housing 104 of a lens assembly 103. The switching lever 111 is pivotably fixed to the rear side fixing plate 107 of the housing 104 and has a first end 111a, which is linked with the OLPF fixing part 131 to turn the OLPF fixing part 131 between a diurnal OLPF setting position (See dotted lines of Figure 4, and Figure 5B) and a nocturnal OLPF setting position (See solid lines of Figure 4, and Figure 5A). When the OLPF fixing part 131 is set in the diurnal OLPF setting position, the diurnal filter 130 is located in the image propagation path between a lens 105 and a image sensing element (not shown). On the other hand, when the OLPF fixing part 131 is set in the nocturnal OLPF setting position, the nocturnal filter 129 is located in the image propagation path between the lens 105 and the image sensing element. The operating part 115 is slidably disposed in an outer casing 101 which seals the lens assembly 103. The link part 123 is connected with the operating part 115 and a second end 111b of the switching lever 111 which forms a predetermined angle with respect to the first end 111a. The link part 123 transforms the movement of the operating part 115 into a tangential movement S in a rotational trajectory of the second end 111b of the switching lever 111.

As shown in Figures 5A and 5B, the OLPF fixing part 131 has an upper portion pivotably fixed to a first shaft 134, formed on the rear side fixing plate 107 of the housing 104, to turn on the first shaft 134. The OLPF fixing part 131 has side surfaces 139 and 139' contacting first and second stoppers 136, 138 which are formed on the rear side fixing plate 107 to prevent the OLPF fixing part 131 from moving further than the diurnal OLPF setting position and the nocturnal OLPF setting position.

The diurnal filter 130 is an infrared rays blocking filter for removing light in the infrared spectrum from the image formed on the image sensing element and transmitting only light in the visible spectrum, while the nocturnal filter 130 is a dummy filter which transmits light in both the visible and the infrared spectra.

The switching lever 111 is pivotably fixed to a second shaft 141 formed on the rear side fixing plate 107 of the housing 104. The first end 111a of the switching lever 111 has a first axially protruding part 112a inserted in a first movement hole 143, which is defined in the upper portion of the OLPF fixing part 131, adjacent the first shaft 134, and has one side open. The OLPF fixing part 131 is turned by the first axially protruding part 112a.

The operating part 115 comprises a knob 117, protruding from a sidewall of the outer casing 101 of the camcorder to the outside and movably disposed in a sliding slot 101a formed in the sidewall of the outer casing 101, and a slider 119 held in a holder 125 formed in the outer casing 101 and movable up and down therein.

Preferably, the slider 119 slides up and down in an inclined manner.

The slider 119 has a protruding member 121, protruding from the inner side thereof toward the inner side of the outer casing 101. The protruding member 121 has a pivoting shaft 120, inserted into a fixing hole 128 formed in one end 123a of the link part 123.

One end 123a of the link part 123 is pivotably connected with the pivoting shaft 120 of the protruding member 121 of the operating part 115 and the other end 123b of the link part 123 is preferably elbow-shaped and has a second movement hole 124 in which a second axially protruding part 112b, formed at the second end 111b of the switching lever 111, is movably received.

Accordingly, as the protruding member 121 is moved up and down by the knob 117 in a linear movement, the other end 123b of the link part 123 moves in a tangential direction along the rotational trajectory S of the second axially protruding part 112b of the second end 111b of the switching part 111, thereby pushing and pulling the switching part 111. As a result, the slider 119 of the operating part 115 and the knob 117 can be smoothly moved.

Operation of the OLPF switching apparatus 110 with the above construction will now be described in greater detail with reference to Figures 4 to 5B.

If the OLPF switching apparatus 110 is in the diurnal mode for recording in colour, the knob 117 of the operating part 115 is located at the lower position and the OLPF fixing part 131 is located in the diurnal OLPF setting position as shown in Figure 5B. In this state, when an operator wants to switch to the nocturnal OLPF because of variation in illumination or switch the diurnal mode to the nocturnal mode for the monochrome image realization to achieve a special effect, the operator slides up the knob 117 of the operating lever 115 to set the OLPF fixing part 131 in the nocturnal OLPF setting position.

As a result, the protruding member 121 of the slider 119 moves up and, thus, one end 123a of the link part 123, pivotably connected with the pivoting shaft 120 of the protruding member 121, also moves up.

The other end 123b of the link part 120, which has the second movement hole 124 engaged with the second axially-protruding part 112b of the second end 111b of the switching lever 111, moves in a tangential direction along the rotational trajectory of the second axially protruding part 112b, thereby moving up the second axially protruding part 112b. As a result, the switching lever 111 turns on the second shaft 141 in a clockwise direction as shown in Figure 5A.

As the switching lever 111 turns in the clockwise direction, the first axially-protruding part 112a of the first end 111a inserted in the first movement hole 143 turns the OLPF fixing part 131 about the first shaft 134 in a counter clockwise direction.

Accordingly, the nocturnal filter 129 moves to the nocturnal OLPF setting position (Figure 5A) where it is located on the image propagation path between the lens 105 and the image sensing element until the side surface 139 of the OLPF fixing plate 131 is blocked from moving by the second stopper 138. As a result, the OLPF switching apparatus 110 is set in the nocturnal mode.

When the operator wants to return the OLPF switching apparatus 110 back to the diurnal mode after recording in the nocturnal mode, he or she slides down the knob 117 of the operating lever 115. Accordingly, the protruding member 121, the link part 123, the switching lever 111 and the OLPF fixing part 131 are operated in the reverse of the operation described above, so that the OLPF fixing part 131 switches from the nocturnal OLPF setting position (Figure 5A) to the diurnal OLPF setting position (Figure 5B) and the OLPF switching apparatus 110 is set in the diurnal mode.

As described above, the OLPF switching apparatus 110 smoothly transforms the up and down linear movement of the knob 117 of the operating part 115 into the rotational movement of the switching lever 111. Accordingly, the knob 117 of the operating part 115 moves smoothly, and thus, the related parts are prevented from being damaged and the reliability of a product can be maintained.

## Claims

1. A camcorder comprising:
an optical filter (130) mounted to a carrier (131) for rotation into and out of an operational position;
a lever (111) coupled to the carrier (131) for rotating the carrier (131) so as to move the optical filter (130) into and out of the operation position;
a user-operable slider (115) mounted for linear motion and coupled to the lever (111) for pivoting the lever (111),
**characterised in that** the slider (115) is coupled to the lever (111) by a link (123) configured to convert linear motion of the slider (115) into motion substantially conforming to the locus of the joint between the link (123) and the lever (111).

2. A camcorder according to claim 1, wherein said joint comprises an aperture (124) in which an end (112b) of the lever (111) is moveably received.

3. A camcorder according to claim 1 or 2, wherein the link (123) is pivotably coupled at one end to the slider (115) and pivotably coupled at its other end to the lever (111).

4. A camcorder according to claim 3, wherein the link (123) is bent.

5. A camcorder according to any preceding claim, wherein the relative positions and motions of the slider (115), the link (123) and the lever (111) are substantially as shown in Figures 5A and 5B.

6. An Optical Low Pass Filter (OLPF) switching apparatus of a digital camcorder, comprising:
an OLPF fixing part pivotably fixed to a housing of a lens assembly and having a first OLPF and a second OLPF, the first OLPF for passing light of a first wavelength spectrum range among incoming image information, the second OLPF for passing light of a second wavelength spectrum range among the incoming image information;
a switching lever pivotably fixed to the housing and having a first end which is linked with the OLPF fixing part to selectively locate the OLPF fixing part in one of a first OLPF setting position where the first OLPF is located on an image information conveyance path and a second OLPF setting position where the second OLPF is located on the image information conveyance path;
an operating part slidably disposed in an outer casing which seals the lens assembly; and
a link part connected with the operating part and a second end of the switching lever forming a predetermined angle with respect to the first end, for transforming the movement of the operating part into a tangential direction movement of a rotation trajectory of the second end of the switching lever.

7. The OLPF switching apparatus as claimed in claim 6, wherein the link part comprises one end pivotably connected to the operating part and the other end having a movement hole in which the second end of the switching lever is movably received.

8. The OLPF switching apparatus as claimed in claim 7, wherein the operating part comprises:
a knob protruding from a sidewall of the outer casing to the outside and moving in a slider slot defined in the outer casing;
a slider connected with the knob and sliding up and down in an inclined manner; and
a protruding member protruding from the inner side of the slider and having a pivoting shaft on which one end of the link part pivots.

9. The OLPF switching apparatus of claim 7, wherein the link part transforms the movement of the operating part into a tangential movement along a rotational trajectory from the second end of the switching lever.

10. A method of switching an Optical Low Pass Filter (OLPF) in a digital camcorder, comprising the steps of:
pivotably attaching an OLPF fixing part to a housing of a lens assembly, the OLPF fixing part having a first OLPF and a second OLPF, the first OLPF for passing light of a first wavelength spectrum range among incoming image information, the second OLPF for passing light of a second wavelength spectrum range among the incoming image information;
pivotable attaching a switching lever to the housing, the switching lever having a first end which is linked with the OLPF fixing part to selectively locate the OLPF fixing part in one of a first OLPF setting position where the first OLPF is located on an image information conveyance path and a second OLPF setting position where the second OLPF is located on the image information conveyance path;
slidably disposing an operating part in an outer casing that seals the lens assembly; and
connecting the operating part and a second end of the switching lever to move operating part in a tangential direction movement of a rotation trajectory of the second end of the switching lever.

11. A method as claimed in claim 10, wherein the connecting step comprises connecting a link part with the operating part and a second end of the switching lever to form a predetermined angle with respect to the first end.

12. A method as claimed in claim 11, wherein the link part comprises one end pivotably connected to the operating part and the other end having a movement hole in which the second end of the switching lever is movably received.
